# EUROPÄISCHE PATENTSCHRIFT

(11) **EP 2 422 947 B1**
(45) Veröffentlichungstag und Bekanntmachung des Hinweises auf die Patenterteilung: **09.01.2013**
(21) Anmeldenummer: 10173829.2
(22) Anmeldetag: 24.08.2010
(51) Int. Cl.: B27D 5/00, B23K 26/08, B29C 63/00, B23K 26/42

(54) **Vorrichtung zum Beschichten von Werkstücken**
Device for coating workpieces
Dispositif de revêtement de pièces

(43) Veröffentlichungstag der Anmeldung: 29.02.2012
(60) Teilanmeldung: 12177987.0
(73) Patentinhaber: Homag Holzbearbeitungssysteme AG, 72296 Schopfloch (DE)
(72) Erfinder: Schmid, Johannes, 72181, Starzach/Wachendorf (DE); Petrak, Axel, 72160, Horb am Neckar (DE)
(74) Vertreter: HOFFMANN EITLE

(56) Entgegenhaltungen:
- EP-A2- 1 800 813
- WO-A1-2007/028402
- WO-A1-2010/149376
- DE-A1- 3 027 590
- JP-A- 61 020 680
- US-A1- 2008 089 382

## Beschreibung

### Technisches Gebiet

Die Erfindung betrifft eine Vorrichtung zum Beschichten von Werkstücken mit einem Beschichtungsmaterial, wobei die Werkstücke insbesondere aus Holz, Holzwerkstoffen, Kunststoffen oder dergleichen bestehen. Dabei führt eine Zuführvorrichtung das Beschichtungsmaterial zu, an die sich ein Aktivierungsbereich, in welchem das Beschichtungsmaterial aktiviert wird, anschließt. Eine in die Vorrichtung integrierte Andruckvorrichtung drückt das aktivierte Beschichtungsmaterial zur Applikation auf die zu beschichtende Werkstückfläche.

Vorrichtungen dieser Art eignen sich für den Einsatz in der Holzbearbeitung, insbesondere der Möbel- und
Bauelementeindustrie.

### Stand der Technik

Derartige Beschichtungsvorrichtungen werden zum Beispiel zur Beschichtung von Werkstücken mit bandförmigem Schmalflächenbeschichtungsmaterial eingesetzt. Eine solche Vorrichtung ist aus der WO 01/36168 A1 bekannt. Dieses Dokument offenbart eine Vorrichtung und ein Verfahren zum Auftragen eines Beschichtungsmaterials auf eine Schmalfläche eines Werkstücks. Dazu wird das Beschichtungsmaterial per Zuführungseinrichtung von einer Rolle kontinuierlich dem Beschichtungsprozess zugeführt. Im Fall dieses Durchlaufverfahrens wird das Beschichtungsmaterial zunächst aktiviert und anschließend die aktivierte Fläche mit der zu beschichtenden Fläche des Werkstücks in Kontakt gebracht. Eine Andruckvorrichtung unterstützt dabei den Kontakt zwischen Beschichtungsmaterial und Werkstück. Sie gleicht außerdem geringe Abweichungen von einer optimalen Werkstückausrichtung aus.

Bei dieser Vorrichtung werden die Werkstücke kontinuierlich durch die Beschichtungsvorrichtung geführt. Damit ist sie insbesondere für Werkstücke geeignet, die lange, gerade und schmale Flächen besitzen. Derartige Werkstücke lassen sich für den Beschichtungsprozess optimal zur Beschichtungsvorrichtung ausrichten, was eine wichtige Voraussetzung für eine qualitativ hochwertige Beschichtung ist.

Besitzt ein Werkstück aus ästhetischen und/oder funktionellen Gründen eine zu beschichtende Fläche, die mindestens in einer Ebene nicht mehr gerade verläuft, wie zum Beispiel ein bogenförmiger Verlauf, so ist der Wirkbereich der Andruckeinrichtung nicht mehr ausreichend, um das Beschichtungsmaterial fortlaufend an die zu beschichtende Fläche des Werkstücks anzudrücken.

Derartige Beschichtungsvorrichtungen können immer nur eine Schmalfläche beschichten. Ist auch eine Beschichtung der anderen Schmalflächen gewünscht, so sind mehrere Beschichtungsdurchläufe notwendig, zwischen denen das Werkstück jedes Mal erneut ausgerichtet und der Beschichtungsvorrichtung wieder zugeführt wird. Dies ist besonders bei Kleinserien aufwändig.

In diesem Zusammenhang offenbart die EP 1 800 813 A2 ein Verfahren zur Beschichtung von Bauteilen, bei dem das Bauteil und die solide Beschichtung relativ zueinander bewegt und mittels Klebstoff im Bereich einer Andruckzone miteinander verbunden werden. Der Klebstoff wird im Bereich einer Wirkzone durch Bestrahlung mit mindestens einem Laser aktiviert oder reaktiviert und anschließend wird die solide Beschichtung durch ein Andruckelement mit dem Bauteil verbunden. Der Bereich, in dem der Laserstrahl auf die Oberfläche des Klebstoffes und/oder des Bauteils und/oder der soliden Beschichtung auftritt, wird als Wirkfleck bezeichnet. Der Wirkfleck kann durch Strahloszillation bzw. Strahlformung durch eine geeignete Optik der Geometrie der zu aktivierenden Klebstoffoberfläche angepasst werden. Die EP 1 800 813 A2 bildet die Grundlage für den Oberbegriff des Anspruchs 1.

### Darstellung der Erfindung

Der Erfindung liegt daher die Aufgabe zu Grunde, eine Beschichtungsvorrichtung derart zu gestalten, dass sie auch bei größeren Konturabweichungen des Werkstücks eine qualitativ hochwertige Beschichtung ermöglicht. Dabei geht es nicht nur darum, fertigungsbedingte Abweichungen von der Idealform, sondern auch ästhetisch und/oder funktionell geforderte Konturen der zu beschichtenden Werkstückfläche auszugleichen, die von einer ebenen Fläche abweichen.

Diese Aufgabe wird durch die Erfindung mit den Merkmalen aus Anspruch 1 gelöst. Vorteilhafte Ausgestaltungen der erfindungsgemäßen Vorrichtung ergeben sich aus den Unteransprüchen.

Die Erfindung basiert auf der Idee, den relativen Abstand zwischen Werkstück und Beschichtungsvorrichtung kontinuierlich während des Beschichtungsprozesses anzupassen.

In die erfindungsgemäße Vorrichtung sind zumindest ein Teil der zur Beschichtung eines Werkstücks notwendigen Vorrichtungen integriert. Eine Zuführvorrichtung führt das Beschichtungsmaterial einem Aktivierungsbereich zu. Nach dem Aktivierungsbereich befindet sich eine Andruckvorrichtung zur kontinuierlichen Applikation des Beschichtungsmaterials auf der zu beschichtenden Werkstückfläche. Um den Kontakt zwischen Beschichtungsmaterial und Werkstückfläche auch bei konturierten Werkstückflächen zu gewährleisten, sind zumindest der Aktivierungsbereich zusammen mit der Andruckvorrichtung und das Werkstück im Zuge des Beschichtungsvorgangs in mindestens einer Bewegungsebene relativ zueinander bewegbar und/oder rotierbar. Dabei existieren mehrere Möglichkeiten, eine relative Bewegung des Werkstücks und der Beschichtungseinrichtung zueinander auszuführen, so dass die Beschichtungsvorrichtung möglichen Formänderungen der zu beschichtenden Werkstücktläche folgen kann. So ist es denkbar, lediglich das Werkstück an der ortsfesten Beschichtungsvorrichtung durch Rotation und Translation vorbeizuführen (Durchlauftechnik) oder nur die Beschichtungsvorrichtung zu bewegen, so dass das hier ortsfeste Werkstück während des Aufbringens der Beschichtung beispielsweise umfahren wird (Stationärtechnik). Es kann aber auch der Fall vorliegen, zum Beispiel bei einer komplexen Werkstückgeometrie, dass es vorteilhaft ist, sowohl das Werkstück als auch die Beschichtungsvorrichtung zueinander zu bewegen.

In einer bevorzugten Ausgestaltung der erfindungsgemäßen Vorrichtung weist diese eine Energiequelle auf, die das Beschichtungsmaterial im Aktivierungsbereich aktiviert. Zwischen der Energiequelle und dem Beschichtungsmaterial befinden sich Elemente zur Übertragung der von der Energiequelle emittierten Energie in Form einer Strahlung. Diese Elemente leiten die Strahlung innerhalb des Aktivierungsbereichs der Vorrichtung auf die Beschichtung, um so die Beschichtung zu aktivieren. In diesem Zusammenhang kann das Aktivieren der Beschichtung beispielsweise bedeuten, dass eine zumindest abschnittsweise im Beschichtungsmaterial inhärent vorhandene Eigenschaft wie Haftbarkeit durch die Strahlung zu wirken beginnt. Genauso ist es möglich, dass zumindest ein Teil einer auf das Beschichtungsmaterial aufgebrachte Schicht durch die Strahlung zum Beispiel als Klebeschicht dient. In einer besonders bevorzugten Ausführungsform überträgt ein Laserstrahl die für die Aktivierung des Beschichtungsmaterials notwendige Energie.

In der erfindungsgemäßen Vorrichtung befindet sich um den Aktivierungsbereich zumindest abschnittsweise eine Energiefalle. Die Energiefalle umfasst eine Austrittsöffnung und ggf. mindestens eine Eintrittöffnung, um zum einen das aktivierte Beschichtungsmaterial zur Beschichtung der Werkstückfläche weiterzuleiten. Eine Eintrittsöffnung für die Strahlung ist vorzugsweise dann Teil der Energiefalle, wenn die Strahlung von außen in die Vorrichtung eingeleitet wird. Mit Hilfe der Energiefalle wird ein ungewünschter Austritt der energiereichen Aktivierungsstrahlung in die Umgebung vermieden und so die Betriebssicherheit der Beschichtungsvorrichtung erhöht.

In einer weiteren Ausführungsform ist mindestens ein dem Beschichtungsmaterial zugewandter Abschnitt der Innenseite der Energiefalle konkav oder konvex ausgebildet. Diese Ausgestaltung der Energiefalle kann bevorzugt auch als Lauffläche für das Beschichtungsmaterial dienen. Dabei läuft das Beschichtungsmaterial vorzugsweise zumindest entlang des Scheitelpunkts der konkaven oder konvexen Ausbildung der Innenseite der Energiefalle. Weiterhin ist dieser Abschnitt bevorzugt derart konkav oder konvex ausgebildet, dass der Strahlung im Aktivierungsbereich, insbesondere der Streustrahlung, der direkte Weg zu jeglicher Ein- und/oder Austrittsöffnung verwehrt ist. Die Gefährdung der Umgebung wird so auf ein Minimum beschränkt. Weiterhin wird dadurch sichergestellt, dass die Strahlung nur im Aktivierungsbereich wirkt und nicht etwa außerhalb des Aktivierungsbereichs den Aktivierungszustand des Beschichtungsmaterials in unkontrollierter Weise beeinflusst.

In einer weiteren bevorzugten Ausführungsform besitzt die Innenseite der Energiefalle zumindest abschnittsweise eine die Strahlung absorbierende Beschichtung, so dass zumindest beim Auftreffen der Strahlung auf das Beschichtungsmaterial entstehende Streustrahlung innerhalb der Energiefalle absorbiert wird. Ein negativer Einfluss einer solchen Strahlung auf das Beschichtungsmaterials wird so vermieden. Weiterer Vorteil ist, dass einer im Fall einer Fehlfunktion möglicherweise energiereicheren oder weniger fokussierten Strahlung auf diese Art und Weise das Gefährdungspotential genommen wird.

Es befindet sich in einer weiteren besonders bevorzugten Ausführungsform der Erfindung eine zweite Energiefalle in dem Aktivierungsbereich. Diese ist in Richtung des Strahlungsverlaufs hinter dem Auftreffpunkt der Strahlung auf das Beschichtungsmaterial angeordnet. Ist kein Beschichtungsmaterial im Auftreffpunkt der Strahlung zugegen, wohl aber eine Strahlung, kann die eingeleitete Energie möglicherweise Schäden im Aktivierungsbereich hervorrufen. Die genannte zweite Energiefalle stellt deswegen sicher, dass die eingeleitete Energie absorbiert wird und erhöht so die Sicherheit der Beschichtungsvorrichtung.

In einer weiteren bevorzugten Ausführungsform ist die zweite Energiefalle zumindest abschnittsweise mit einer die Strahlung absorbierenden Beschichtung ausgestattet. Dabei ist es zusätzlich von Vorteil, den Querschnitt der zweiten Energiefalle so auszuführen, dass eine Rückreflexion der Strahlung durch die Energiefallenöffnung vermieden wird und so die Strahlungsabsorption in der zweiten Energiefalle erhöht wird.

Gemäß einer weiteren Ausgestaltung der Vorrichtung werden für die Energiequelle bevorzugt Laser, wie Diodenlaser, Festkörperlaser, Faserlaser, CO2-Laser, oder weitere Energiequellen, insbesondere Heißluftquellen, thermische Strahlquellen wie insbesondere Infrarotquellen, Ultraschallquellen, Magnetfeldquellen, Mikrowellenquellen, Plasmaquellen und/oder Begasungsquellen eingesetzt. Dabei ist die Energiequelle in die Vorrichtung integriert oder ihre Strahlung wird über Lichtwellenleiter, insbesondere über eine Faserkopplung und/oder über optische Elemente zugeführt. Jede der oben genannten Energiequellen besitzt ihre spezifischen Vorteile. So ermöglicht ein Laser ein besonders zielorientiertes und zügiges Arbeiten, während Infrarot- und Plasmaquellen einen breitspurigen Betrieb und eine gute Tiefenwirkung zulassen. Energiequellen mit Ultraschall, Magnetfeld und Mikrowelle arbeiten berührungslos und können auch während des Andrückens des Beschichtungsmaterials noch Energie in den Prozess einbringen. Dabei besitzt insbesondere ein Magnetfeld eine gute Tiefenwirkung. Eine auf Begasung basierende Energiequelle eignet sich besonders gut dazu, durch Einwirkung auf und Reaktion mit dem Beschichtungsmaterial überhaupt erst einen Stoff zu bilden, der haftende Eigenschaften besitzt.

In einer weiteren bevorzugten Ausgestaltung kann das Beschichtungsmaterial vor, während oder nach dem Beschichtungsvorgang mit der im Aktivierungsbereich wirkenden Strahlung durchtrennt werden. Eine solche Ausgestaltung hat den Vorteil, dass eine zusätzliche Vorrichtung zum Schneiden des Beschichtungsmaterials nicht notwendig ist.

Gemäß einer weiteren bevorzugten Ausgestaltung befindet sich vor und/oder nach dem Aktivierungsbereich mindestens eine weitere Energiequelle, insbesondere aus obiger Liste, um die aufzubringende Beschichtung weiter oder zusätzlich zu behandeln. Damit ist es auf einfache Art und Weise möglich, zusätzliche Behandlungstechnologien für die Beschichtung in die Vorrichtung zu integrieren.

Obwohl die Vorrichtung als fester Bestandteil in eine Fertigungsmaschine integriert sein kann, ist es gemäß einer weiteren bevorzugten Ausgestaltung möglich, die Vorrichtung über ein Kopplungsmittel in eine geeignete Aufnahme wie beispielsweise eine Spindeleinheit einwechselbar auszuführen. Dies hat den Vorteil, dass über die Spindeleinheit auch andere Vorrichtungen eingewechselt werden können - die Fertigungstiefe der Maschine also höher ist. Weiterhin wird durch diese Art der Ausführung gewährleistet, dass im Fall einer Fehlfunktion der Vorrichtung diese umgehend durch eine gleichwertige Vorrichtung ersetzt werden kann. Störungen des Beschichtungsvorgangs sind somit schnell zu beheben.

Gemäß einer weiteren bevorzugten Ausgestaltung der erfindungsgemäßen Vorrichtung ist, im Fall einer außerhalb der Vorrichtung angeordneten Strahlungsquelle, ein die Strahlung zuführendes Element in die Vorrichtung integriert, durch das die Strahlung von der Energiequelle in die Vorrichtung geführt wird. Dieses Element umfasst vorzugsweise mindestens einen Lichtwellenleiter und einen Kollimator. Der Punkt für den Strahlungseintritt ist bevorzugt auf der Rotationsachse des Kopplungsmittels angeordnet, so dass die Strahlung entlang besagter Rotationsachse in die Vorrichtung mit dem Aktivierungsbereich gelangt. Diese Ausführungsform hat den Vorteil, dass der die Strahlung transportierende Leiter relativ zur Strahlungsquelle ortsfest angeordnet werden kann und so bei Rotation der Vorrichtung keinen Torsionsbelastungen ausgesetzt wird.

Gemäß einer weiteren besonders bevorzugten Ausgestaltung der Erfindung ist die Strahlzuführung in die Vorrichtung so ausgeführt, dass die Strahlung von ihr aus direkt oder indirekt zu ihrem Auftreffpunkt auf das Beschichtungsmaterial geleitet wird. Zwischen Strahlzuführung und Auftreffpunkt können Elemente angeordnet sein, die die Strahlung in ihrer Geometrie, Richtung und/oder Stärke verändern. Der Einsatz solcher Elemente ermöglicht es, die Strahlung außerhalb der Rotationsachse in die Vorrichtung zu leiten.

### Kurze Beschreibung der Figuren

- Fig. 1: zeigt eine schematische Darstellung der erfindungsgemäßen Vorrichtung zusammen mit einem zu beschichtenden Werkstück
- Fig. 2: zeigt eine Schnittansicht der Strahlzuführung der erfindungsgemäßen Vorrichtung, bei der die Strahlung entlang der Rotationsachse des Kopplungsmittels in die Vorrichtung geleitet wird.
- Fig. 3: zeigt eine Schnittansicht der Strahlzuführung der erfindungsgemäßen Vorrichtung, bei der die Strahlung zunächst von außen der Rotationsachse des Kopplungsmittels zugeführt wird und anschließend entlang der Rotationsachse in die Vorrichtung gelangt.

### Ausführliche Beschreibung bevorzugter Ausführungsformen der Erfindung

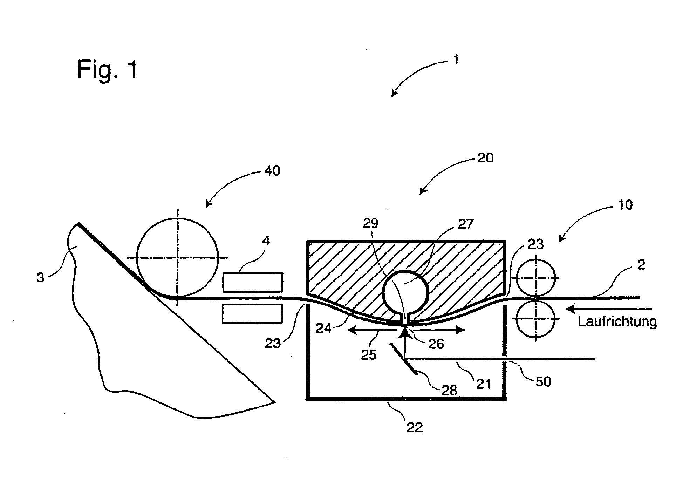

Im Folgenden werden beispielhafte Ausführungsformen der Erfindung unter Bezugnahme auf die Fig. 1-3 beschrieben. Dabei ist Fig. 1 eine schematische Darstellung einer erfindungsgemäßen Vorrichtung 1 zum Beschichten von Werkstücken 3, die bevorzugt zumindest abschnittsweise aus Holz, Holzwerkstoffen, Kunststoff oder dergleichen bestehen. Zum Folgen der Kontur beim Beschichtungsvorgang bewegt sich bevorzugt die Beschichtungsvorrichtung relativ zu der zu beschichtenden Werkstückfläche. Insgesamt existieren jedoch mehrere Möglichkeiten eine relative Bewegung des Werkstücks und der Beschichtungseinrichtung zueinander auszuführen, so dass die Beschichtungsvorrichtung möglichen Formänderungen der zu beschichtenden Werkstückfläche folgen kann. So ist es denkbar, lediglich das Werkstück an der Beschichtungsvorrichtung durch Rotation und Translation vorbeizuführen, um so den für die Beschichtung benötigten Abstand sicherzustellen. Es kann aber auch ein Fall vorliegen, zum Beispiel bei einer komplexen Werkstückgeometrie, dass es vorteilhaft ist, sowohl das Werkstück, als auch die Beschichtungsvorrichtung zueinander zu bewegen.

Mit der Beschichtungsvorrichtung 1 ist es somit beispielsweise möglich, Werkstückkonturen abzufahren, die aus ästhetischen und/oder funktionellen Gründen von ebenen Flächen abweichen. Das Auftragen des Beschichtungsmaterials 2 auf der Werkstückfläche findet dabei bevorzugt über eine Andruckvorrichtung 40 statt. Dabei gleicht diese von der Idealform abweichende Unebenheiten aus.

Bei der Beschichtungsvorrichtung 1 befindet sich auf der Zuführungsseite für das Beschichtungsmaterial 2 bevorzugt eine Zuführungsvorrichtung 10. Hinter der Zuführungsvorrichtung 10 ist bevorzugt der Aktivierungsbereich 20 angeordnet, möglicherweise gefolgt von einer Energiequelle 3. Am Ende der erfindungsgemäßen Vorrichtung 1 befindet sich die Andruckvorrichtung 40.

Nach der Zuführungsvorrichtung 10 ist bevorzugt eine Eintrittsöffnung 23 in der Energiefalle 22 angeordnet. Somit befördert die Zuführungsvorrichtung 10 das Beschichtungsmaterial 2 über die Eintrittsöffnung 23 in die Energiefalle 22. Das präzise Zuführen des Beschichtungsmaterials 2 ermöglicht es, die Größe der Eintrittsöffnung 23 klein zu halten. Es ist weiterhin möglich, zusätzliche Führungsvorrichtungen entlang der Laufrichtung des Beschichtungsmaterials 2 zu positionieren, insbesondere bei dessen Austritt aus der Energiefalle 22. Zusätzlich kann mit der Zuführvorrichtung 10 die Zuführgeschwindigkeit für das Beschichtungsmaterial 2 gesteuert und so der Geschwindigkeit des fortlaufenden Beschichtungsvorgangs angepasst werden.

In der Energiefalle 22 befindet sich bevorzugt eine Strahlzuführung 50 über die die Strahlung 21 in die Energiefalle 22 gelangt. Die Energiefalle 22 besitzt an ihrer Innenseite besonders bevorzugt eine konvexe Wölbung 24, auf deren Scheitelpunkt sich der Auftreffpunkt 26 der Strahlung 21 auf das Beschichtungsmaterial 2 befindet. Des Weiteren umfasst die Energiefalle 22 unter Umständen Elemente 28, die Geometrie, Richtung und Stärke der Strahlung verändern. Dies hat den Vorteil, dass die Strahlung 21 beispielsweise der Breite der durchlaufenden Beschichtung 2 im Rahmen der Aktivierung angepasst werden kann oder nur festgelegte Bereiche des Beschichtungsmaterials 2 aktiviert werden.

Beim Auftreffen der Strahlung 21 auf der Höhe des Auftreffpunkts 26 entsteht Streustrahlung 25. Die bevorzugt konvexe Form zumindest eines Abschnittes der Innenseite der Energiefalle 22 hat in diesem Zusammenhang insbesondere zwei Vorteile. Zum Ersten führt die konvexe Form 24 dazu, dass die Streustrahlung 25 die Energiefalle 22 nicht auf direktem Wege durch die Öffnungen 23 verlassen kann, zum Zweiten dient die konvexe Fläche 24 zumindest abschnittsweise als Gegenlager und Lauffläche für das Beschichtungsmaterial 2, um es zur Aktivierung am Auftreffpunkt 26 der Strahlung 21 vorbeizuführen.

Des Weiteren befindet sich auf den Innenseiten der Energiefalle 22 bevorzugt zumindest abschnittsweise eine die Strahlung absorbierende Schicht. Diese absorbiert insbesondere die am Auftreffpunkt 26 entstehende Streustrahlung 25 und vermeidet so, dass diese zu einer Vorund/oder Nachaktivierung des Beschichtungsmaterials 2 führt.

In Richtung des Strahlungsverlaufs gesehen, befindet sich bevorzugt hinter dem Auftreffpunkt 26 eine Öffnung 29 zu einer zweiten Energiefalle 27. Ist die Energiequelle aktiviert, so dass die Strahlung 21 bereits beim Auftreffpunkt 26 bereitgestellt wird, aber noch kein Beschichtungsmaterial 2 zugeführt wird (beispielsweise bei fehlerhaftem Transport des Kantenbandes), absorbiert die zweite Energiefalle 27 die Strahlung 21. Die Energiefalle 27 hat einen Querschnitt, der bevorzugt so gestaltet ist, dass durch die Öffnung 29 eintretende Strahlung 21 nicht direkt nach Reflexion aus der Öffnung 29 wieder austreten kann. Dabei besitzt die Innenseite der zweiten Strahlfalle 27 bevorzugt zumindest abschnittsweise eine die Strahlung absorbierende Schicht. In einer weiteren, besonders bevorzugten Ausführungsform kann mit der Strahlung 21 zusätzlich das Beschichtungsmaterial 2 zu Beginn, während und/oder am Ende des Beschichtungsvorgangs durchtrennt werden. Auch hier absorbiert die zweite Strahlfalle 27 die Strahlung 21, die während des Trennvorgangs über den Auftreffpunkt 26 hinausgeht.

Um die bei der Absorption der Strahlung 21 entstehende Wärme abzuführen, kann die Vorrichtung passive Kühlrippen und/oder aktive Kühlkanäle zur Kühlung der Energiefalle 22 und/oder zweiten Energiefalle 27 aufweisen. Dadurch wird verhindert, dass die Vorrichtung oder die bei der Fertigung verarbeiteten Werkstoffe, insbesondere das Beschichtungsmaterial 2 und/oder das Werkstück 3, beschädigt werden. Die Kühlung hat in diesem Zusammenhang weiterhin den Vorzug, dass störende Einflüsse auf die Temperatur der Verarbeitungsumgebung vermieden werden.

Nach Aktivierung des Beschichtungsmaterials 2 beim Auftreffpunkt 26 der Strahlung 21 verlässt das Beschichtungsmaterial 2 die Energiefalle 22 bevorzugt durch eine Austrittsöffnung 23. So kann das Beschichtungsmaterial 2 den Aktivierungsbereich 20 auf einem einfachen und direkten Weg durchlaufen ohne dabei zusätzlichen Biegebelastungen ausgesetzt zu sein.

Insbesondere nach der Austrittsöffnung 23 können sich weitere Energiequelle 3 zur zusätzlichen Behandlung des Beschichtungsmaterials 2 befinden. Diese Energiequellen 3 können aber auch oder zusätzlich in Laufrichtung gesehen vor dem Aktivierungsbereich angeordnet sein.

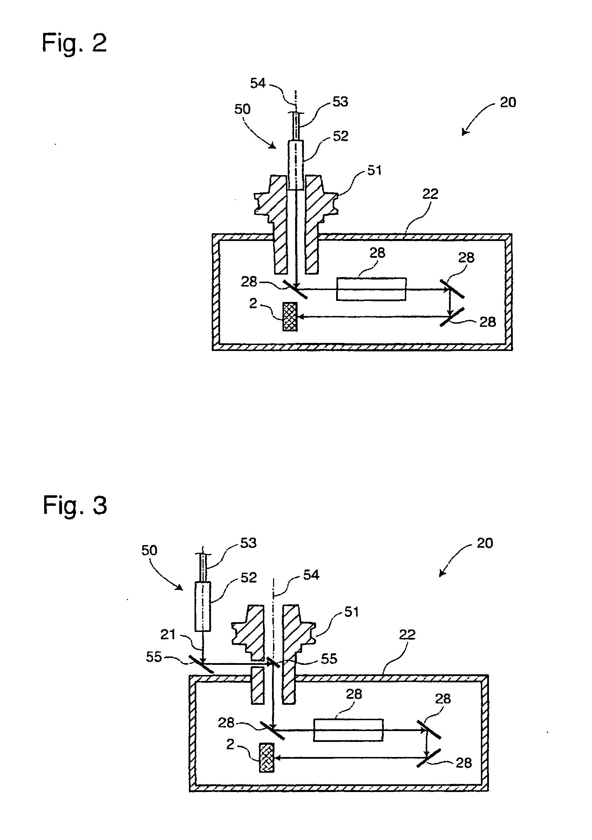

In Fig. 2 ist die Strahlzuführung 50 dargestellt, wobei der Strahl bevorzugt entlang der Rotationsachse des Kopplungsmittels 51 in den Aktivierungsbereich 20 geleitet wird. Hierbei ist das die Strahlung zuführende Element relativ zur externen Energiequelle bevorzugt ortsfest befestigt. Dabei umfasst das die Strahlung zuführende Element bevorzugt einen Lichtwellenleiter 53 und einen Kollimator 52. Die Zuführung des Strahls entlang der Rotationsachse 54 hat den Vorteil, dass sich die Beschichtungsvorrichtung 1 um die Rotationsachse 54 des Kopplungsmittels 51 drehen kann, ohne dass das die Strahlung zuführende Element dieser Rotation folgen muss. Dies ist insbesondere bei Lichtwellenleitern von Vorteil, da sie torsionsempfindlich sind.

Fig. 3 zeigt eine Strahlzuführung 50 über die Seite eines Kopplungsmittels 51. Dazu ist ein die Strahlung zuführendes Element außerhalb des Kopplungsmittels 51 bevorzugt ortsfest zur Vorrichtung 1 angeordnet. Zusätzlich befinden sich Elemente 55 im Strahlengang zur Manipulation von Geometrie, Stärke und/oder Richtung des Strahls 21. Der Strahl 21 wird bevorzugt auf die Rotationsachse 54 des Kopplungsmittels in die Beschichtungsvorrichtung 1 mit den Elementen 55 umgelenkt. Diese Konfiguration hat insbesondere den Vorteil, dass die Komplexität des Aufbaus des Kopplungsmittels 51 reduziert ist. Zudem ist die Strahlzuführung 50 im Bereich des die Strahlung zuführenden Elements bei auftretenden Fehlfunktionen leichter zugänglich.

## Patentansprüche

1. Vorrichtung (1) zum Beschichten von Werkstücken (2), die bevorzugt zumindest abschnittsweise aus Holz, Holzwerkstoffen, Kunststoff oder dergleichen bestehen, mit
einer Zuführvorrichtung (10) zum Zuführen eines Beschichtungsmaterials,
einem Aktivierungsbereich (20) zum Aktivieren des zugeführten Beschichtungsmaterials (2), und
einer Andruckvorrichtung (40) zum Andrücken des aktivierten Beschichtungsmaterials (2) an ein Werkstück (3), und
bei der zumindest der Aktivierungsbereich (20) mit Andruckvorrichtung (40) und das Werkstück (3) im Zuge des Beschichtungsvorgangs in einer senkrecht zur Beschichtungsebene stehenden Bewegungsebene relativ zueinander bewegt und/oder rotiert werden können,
**dadurch gekennzeichnet,**
**dass** der Aktivierungsbereich (20) zumindest abschnittsweise von einer Energiefalle (22) umgeben ist, die eine Austrittsöffnung (23) besitzt, um das aktivierte Beschichtungsmaterial (2) weiterzuleiten.

2. Vorrichtung nach dem Anspruch 1, **dadurch gekennzeichnet,**
**dass** die Aktivierung des soliden Beschichtungsmaterials (2) mit einer Energiequelle, insbesondere einer Strahlung, erfolgt.

3. Vorrichtung nach einem der vorhergehenden Ansprüche, **dadurch gekennzeichnet,**
**dass** die Energiefalle (22) mindestens eine Eintrittsöffnung (23) besitzt.

4. Vorrichtung nach dem Anspruch 3, **dadurch gekennzeichnet,**
**dass** mindestens ein Abschnitt der Innenseite der Energiefalle (22), der dem Beschichtungsmaterial (2) zugewandt ist, als Gegenlager (24) konkav oder konvex ausgebildet ist und zwar bevorzugt derart, dass einer in dem Aktivierungsbereich (20) entstehenden Streustrahlung (25) der direkte Weg zu jeglicher Ein- und/oder Austrittsöffnung (23) verwehrt ist..

5. Vorrichtung nach einem der Ansprüche 3 bis 4, **dadurch gekennzeichnet,**
**dass** sich in Strahlungsrichtung hinter einem Auftreffpunkt (26) der Strahlung auf das Beschichtungsmaterial (2) eine zweite Energiefalle (27) befindet.

6. Vorrichtung nach Anspruch 5, **dadurch gekennzeichnet,**
**dass** der Querschnitt der zweite Energiefallen (27) so ausgeführt ist, dass eine Rückreflexion durch eine Energiefallenöffnung (29) der zweiten Energiefalle (27) vermieden wird.

7. Vorrichtung nach den Ansprüchen 3 bis 6, **dadurch gekennzeichnet,**
**dass** die Innenseite der Energiefalle (22) und/oder der zweiten Energiefalle (27) die Strahlung absorbierende Eigenschaften aufweist, insbesondere eine Beschichtung und/oder Struktur.

8. Vorrichtung nach den Ansprüchen 3 bis 7, **dadurch gekennzeichnet,**
**dass** die Vorrichtung passive Kühlrippen und/oder aktive Kühlkanäle zur Kühlung der Energiefalle (22) und/oder zweiten Energiefalle (27) aufweist.

9. Vorrichtung nach den Ansprüchen 3 bis 8, **dadurch gekennzeichnet,**
**dass** sich innerhalb der Energiefalle (22) Elemente (28) befinden, die die Geometrie, Richtung und/oder Stärke des auf die Oberfläche des Beschichtungsmaterials (2) auftreffenden Strahls (21) verändern.

10. Vorrichtung nach den Ansprüchen 2 bis 9, **dadurch gekennzeichnet,**
**dass** als Energiequelle bevorzugt Laser wie Diodenlaser, Festkörperlaser, Faserlaser oder CO2-Laser, oder weitere Energiequellen, insbesondere Heißluftquellen, thermische Strahlquellen wie insbesondere Infrarotquellen, Ultraschallquellen, Magnetfeldquellen, Mikrowellenquellen, Plasmaquellen und/oder Begasungsquellen verwendet werden können, wobei die Energiequelle in die Vorrichtung (1) integriert ist oder ihre Strahlung bevorzugt über Lichtwellenleiter, insbesondere über eine Faserkopplung und/oder optische Elemente zugeführt wird.

11. Vorrichtung nach den Ansprüchen 2 bis 10, **dadurch gekennzeichnet,**
**dass** das Beschichtungsmaterial (2) mit der im Aktivierungsbereich (20) wirkenden Strahlung durchtrennbar ist.

12. Vorrichtung nach den Ansprüchen 2 bis 11, **dadurch gekennzeichnet,**
**dass** sich vor und/oder nach dem Aktivierungsbereich (20) mindestens eine weitere Energiequelle (3) für die Behandlung des Beschichtungsmaterials (2) befinden.

13. Vorrichtung nach einem der vorhergehenden Ansprüche, **dadurch gekennzeichnet,**
**dass** die Vorrichtung (1) über ein Kopplungsmittel (51) in eine Aufnahme, insbesondere eine Spindeleinheit, einwechselbar ausgeführt ist.

14. Vorrichtung nach den Ansprüchen 2 bis 13, **dadurch gekennzeichnet,**
**dass** die Strahlung über ein zuführendes Element, vorzugsweise mindestens einen Lichtwellenleiter (53) und Kollimator (52) umfassend, über das Kopplungsmittel (51), vorzugsweise über dessen Rotationsachse (54), und/oder eine andere Zuführungsstelle zugeführt wird.

15. Vorrichtung nach den Ansprüchen 2 bis 14, **dadurch gekennzeichnet,**
**dass** die Strahlung in einer Strahlzuführung (50) direkt und/oder indirekt über Elemente (55), die die Strahlung in Geometrie, Richtung und/oder Stärke verändern, zugeführt wird.

## Claims

1. Device (1) for coating workpieces (2) which preferably consist at least in some sections of wood, derived timber products, plastic or the like, having a feed device (10) for feeding a coating material, an activation region (20) for activating the fed coating material (2), and a pressing device (40) for pressing the activated coating material (2) onto a workpiece (3), and in which at least the activation region (20) with pressing device (40) and the workpiece (3) in the course of the coating process may be moved and/or rotated relative to one another in a movement plane standing vertical to the coating plane, **characterised in that** the activation region (20) is surrounded at least in some sections by an energy trap (22) which has an outlet opening (23) to forward the activated coating material (2).

2. Device according to claim 1, **characterised in that** the activation of the solid coating material (2) is effected using an energy source, in particular radiation.

3. Device according to one of the preceding claims, **characterised in that** the energy trap (22) has at least one inlet opening (23).

4. Device according to claim 3, **characterised in that** at least one section of the inner side of the energy trap (22), which is facing the coating material (2), is designed concavely or convexly as a counter-bearing (24) and indeed preferably such that the direct path to any inlet and/or outlet opening (23) is denied to scattered radiation (25) being produced in the activation region (20).

5. Device according to one of claims 3 to 4, **characterised in that** a second energy trap (27) is located in the radiation direction behind a striking point (26) of the radiation on the coating material (2).

6. Device according to claim 5, **characterised in that** the cross-section of the second energy traps (27) is designed so that back-reflection through an energy trap opening (29) of the second energy trap (27) is avoided.

7. Device according to claims 3 to 6, **characterised in that** the inner side of the energy trap (22) and/or of the second energy trap (27) has radiation-absorbing properties, in particular a coating and/or structure.

8. Device according to claims 3 to 7, **characterised in that** the device has passive cooling ribs and/or active cooling channels for cooling the energy trap (22) and/or second energy trap (27).

9. Device according to claims 3 to 8, **characterised in that** elements (28) which change the geometry, direction and/or intensity of the beam (21) striking the surface of the coating material (2) are located within the energy trap (22).

10. Device according to claims 2 to 9, **characterised in that** lasers, such as diode lasers, solid-state lasers, fibre lasers or CO2 lasers, or further energy sources, in particular hot-air sources, thermal beam sources, such as in particular infrared sources, ultrasound sources, magnetic field sources, microwave sources, plasma sources and/or gassing sources, may preferably be used as the energy source, wherein the energy source is integrated into the device (1) or its radiation is preferably fed via light-conducting fibres, in particular via a fibre coupling and/or optical elements.

11. Device according to claims 2 to 10, **characterised in that** the coating material (2) can be cut through using the radiation acting in the activation region (20).

12. Device according to claims 2 to 11, **characterised in that** at least one further energy source (3) for the treatment of the coating material (2) is located upstream and/or downstream of the activation region (20).

13. Device according to one of the preceding claims, **characterised in that** the device (1) is designed to fit interchangeably via a coupling means (51) into a mounting device, in particular a spindle unit.

14. Device according to claims 2 to 13, **characterised in that** the radiation is fed via a feeding element, preferably comprising at least one light-conducting fibre (53) and collimator (52), via the coupling means (51), preferably via its axis of rotation (54), and/or another feed point.

15. Device according to claims 2 to 14, **characterised in that** the radiation is fed in a beam feed (50) directly and/or indirectly via elements (55) which change the radiation in geometry, direction and/or intensity.

## Revendications

1. Dispositif (1) pour le revêtement de pièces (2), qui sont de préférence au moins en partie en bois, en dérivés de bois, en matières plastiques ou en matériaux analogues, comportant :
- un dispositif d'amenée (10) pour amener un matériau de revêtement,
- une zone d'activation (20) pour activer le matériau de revêtement amené (2), et
- un dispositif de pression (40) pour presser le matériau de revêtement activé (2) contre une pièce (3), au moins la zone d'activation (20) avec dispositif de pression (40) et la pièce (3) pouvant être tournées et/ou déplacées l'une par rapport à l'autre dans un plan de déplacement perpendiculaire au plan du revêtement lors de l'opération de revêtement,
**caractérisé en ce que** la zone d'activation (20) est entourée au moins en partie d'un piège à énergie (22) qui a une ouverture de sortie (23) pour emmener le matériau de revêtement activé (2).

2. Dispositif selon la revendication 1, **caractérisé en ce que** l'activation du matériau de revêtement solide (2) s'effectue avec une source d'énergie, notamment un rayonnement.

3. Dispositif selon l'une des revendications précédentes, **caractérisé en ce que** le piège à énergie (22) comporte au moins une ouverture d'entrée (23).

4. Dispositif selon la revendication 3, **caractérisé en ce qu'**au moins une partie du côté intérieur du piège à énergie (22) qui est proche du matériau de revêtement (2) est conçue comme appui (24) concave ou convexe et ce de préférence de manière à interdire à un rayonnement diffus (25) créé dans la zone d'activation (20) tout accès direct à l'ouverture d'entrée et/ou de sortie (23).

5. Dispositif selon l'une des revendications 3 à 4, **caractérisé en ce qu'**un second piège à énergie (27) se trouve, dans la direction du rayonnement, derrière un point d'incidence (26) du rayonnement sur le matériau de revêtement (2).

6. Dispositif selon la revendication 5, **caractérisé en ce que** la section transversale du second piège à énergie (27) est réalisée de manière à éviter une réflexion en direction de la source à travers une ouverture de piège à énergie (29) du second piège à énergie (27).

7. Dispositif selon les revendications 3 à 6, **caractérisé en ce que** le côté intérieur du piège à énergie (22) et/ou du second piège à énergie (27) ont des propriétés, notamment un revêtement et/ou une structure, absorbant le rayonnement.

8. Dispositif selon les revendications 3 à 7, **caractérisé en ce que** le dispositif comporte des nervures de refroidissement passives et/ou des canaux de refroidissement actifs pour le refroidissement du piège à énergie (22) et/ou du second piège à énergie (27).

9. Dispositif selon les revendications 3 à 8, **caractérisé en ce qu'**il est prévu à l'intérieur du piège à énergie (22) des éléments (28) qui modifient la géométrie, la direction et/ou l'intensité du rayon (21) arrivant sur la surface du matériau de revêtement (2).

10. Dispositif selon les revendications 2 à 9, **caractérisé en ce que** peuvent être utilisés comme source d'énergie de préférence des lasers, tels que laser à diode, laser à solide, laser à fibre ou laser à CO₂, ou d'autres sources d'énergie, notamment des sources d'air chaud, des sources de rayonnement thermique telles que notamment des sources d'infrarouges, des sources d'ultrasons, des sources de champ magnétique, des sources de micro-ondes, des sources de plasma et/ou des sources de gazage, la source d'énergie étant intégrée dans le dispositif (1) ou son rayonnement étant amené de préférence par l'intermédiaire de fibres optiques, notamment par l'intermédiaire d'un couplage de fibres et/ou d'éléments optiques.

11. Dispositif selon les revendications 2 à 10, **caractérisé en ce que** le matériau de revêtement (2) peut être coupé avec le rayonnement agissant dans la zone d'activation (20).

12. Dispositif selon les revendications 2 à 11, **caractérisé en ce qu'**au moins une autre source d'énergie (3) pour le traitement du matériau de revêtement (2) se trouve avant et/ou après la zone d'activation (20).

13. Dispositif selon l'une des revendications précédentes, **caractérisé en ce que** le dispositif (1) est réalisé de manière à pouvoir être échangé dans un logement, notamment dans une unité à broches, par l'intermédiaire d'un moyen de couplage (51).

14. Dispositif selon les revendications 2 à 13, **caractérisé en ce que** le rayonnement est amené par l'intermédiaire d'un élément amenant, comprenant de préférence au moins une fibre optique (53) et un collimateur (52), par l'intermédiaire du moyen de couplage (51), de préférence par l'intermédiaire de l'axe de rotation (54) de celui-ci, et/ou par l'intermédiaire d'un autre point d'amenée.

15. Dispositif selon les revendications 2 à 14, **caractérisé en ce que** le rayonnement est amené dans une entrée de rayonnement (50) directement et/ou indirectement par l'intermédiaire d'éléments (55) qui modifient le rayonnement en géométrie, en direction et/ou en intensité.
